# EUROPÄISCHE PATENTSCHRIFT

(11) **EP 0 688 941 B1**
(45) Veröffentlichungstag und Bekanntmachung des Hinweises auf die Patenterteilung: **26.08.1998**
(21) Anmeldenummer: 95104096.3
(22) Anmeldetag: 20.03.1995
(51) Int. Cl.: F01N 3/20

(54) **Brennkraftmaschine mit Zylinderabschaltung und Abgaskatalysatoren**
Internal combustion engine with cylinder cut-off and exhaust catalysts
Moteur à combustion interne avec mise hors service de cylindres et avec catalyseurs d'échappement

(30) Priorität: 17.06.1994 DE 4421257
(43) Veröffentlichungstag der Anmeldung: 27.12.1995
(73) Patentinhaber: Bayerische Motoren Werke Aktiengesellschaft, 80788 München (DE)
(72) Erfinder: Grotjahn, Ulrich, D-85757 Karlsfeld (DE); Knips, Stephan, D-80639 München (DE); Koch, Günther, D-86199 Augsburg (DE); Missy, Stephan, D-85298 Scheyern (DE); Plodek, Bernd, D-85276 Pfaffenhofen (DE); Zimmer, Rainer, Dr., D-82061 Neuried (DE)

(56) Entgegenhaltungen:
- WO-A-88/04358
- DE-A- 2 242 899
- DE-A- 2 912 796
- FR-A- 2 228 150
- FR-A- 2 490 730
- GB-A- 2 271 299
- PATENT ABSTRACTS OF JAPAN vol. 8 no. 182 (M-319) ,22.August 1984 & JP-A-59 074321 (TOYO KOGYO) 26.April 1984,
- PATENT ABSTRACTS OF JAPAN vol. 7 no. 137 (M-222) [1282] ,15.Juni 1983 & JP-A-58 051210 (NISSAN JIDOSHA) 25.März 1983,
- PATENT ABSTRACTS OF JAPAN vol. 7 no. 137 (M-222) ,15.Juni 1983 & JP-A-58 051212 (NISSAN JIDOSHA) 25.März 1983,

## Beschreibung

Die Erfindung betrifft eine Brennkraftmaschine mit zumindest zwei Zylindergruppen oder Zylindern, denen jeweils eine eigene, eine katalytische Abgasreinigungsvorrichtung aufweisende Abgasleitung zugeordnet ist, die Bestandteil einer Abgasanlage ist, sowie mit einer Einrichtung zum Abschalten einer Zylindergruppe durch Unterbinden der Kraftstoffzufuhr bei Aufrechterhaltung des Gaswechsels durch diese Zylindergruppe. Dabei soll ausdrücklich unter den Begriff einer Zylindergruppe auch ein einzelner Zylinder fallen, wenn diesem eine eigene Abgasleitung mit einem individuellen sog. AbgasKatalysator zugeordnet ist.

Bekannt ist eine Brennkraftmaschine mit Abgaskatalysatoren, die mit Zylinderabschaltung arbeitet, aus der DE-OS 22 42 899. Diese bekannte Anordnung hat jedoch den Nachteil, daß die katalytische Abgasreinigungsvorrichtung der abschaltbaren Zylindergruppe dann, wenn diese Zylindergruppe abgeschaltet ist, auskühlt. Weiterhin findet in dieser abgeschalteten Zylindergruppe nämlich ein Gaswechsel statt, d. h. es wird Frischgas in die Brennräume der Zylinder eingebracht, komprimiert und wieder ausgeschoben. Der Einfachheit halber erfolgt nämlich die Zylinderabschaltung nicht durch Stillsetzen irgendwelcher Steuerungsorgane/Gaswechsel-ventile für den Ladungswechsel, sondern lediglich durch Unterbinden der Kraftstoffzufuhr zu den Brennräumen bzw. Zylindern der abgeschalteten Zylindergruppe. Andererseits benötigen katalytische Abgasreinigungsvorrichtungen (Abgaskatalysatoren) eine gewisse Betriebstemperatur, oberhalb derer sie überhaupt erst in der Lage sind, schädliche Abgasbestandteile zu konvertieren. Wird nun eine Zylindergruppe abgeschaltet, gelangt weiterhin ein Gasstrom durch den zugeordneten Abgaskatalysator, was zu dessen Abkühlung führt, da dieser Gasstrom in den nichtbefeuerten Zylindern selbstverständlich nicht wesentlich erwärmt wurde. Dabei kann die Temperatur des Abgaskatalysators unter dessen Betriebstemperatur absinken. Wird anschließend die zuvor abgeschaltete Zylindergruppe wieder zugeschaltet, d. h. wird dieser Zylindergruppe anschließend nicht nur Frischgas, sondern auch Kraftstoff zugeführt, so ist deren Abgaskatalysator zunächst nicht in der Lage, die Abgas-Schadstoffe zu konvertieren, sondern muß zunächst durch die dann heißen Abgase auf seine Betriebstemperatur gebracht werden.

Eine Abhilfemaßnahme für diese Problematik ist in den Patent abstracts of Japan Vol. 8 No. 182 (M-319), vom 22. August 1984 sowie der zugehörigen JP-A-59 074321 bekannt, wonach der der abschaltbaren Zylindergruppe zugeordnete Abgaskatalysator konzentrisch innerhalb desjenigen Abgaskatalysators angeordnet ist, der die Abgase der stets befeuerten Zylindergruppe erhält. Letzterer überträgt somit seine Wärme auf den erstgenannten Katalysator und kann diesen somit auf seiner Betriebstemperatur halten. Diese bekannte Anordnung bedingt jedoch einen relativ großen Bauaufwand, nach dem die beiden Abgaskatalysatoren einerseits strömungsdynamisch voneinander zu trennen sind, andererseits jedoch konzentrisch zueinander anzuordnen sind, wobei jeweils eine separate Zuleitung sowie Ableitung der Abgase erfolgen muß.

Weitere Maßnahmen aufzuzeigen, mit Hilfe derer eine Abkühlung der katalytischen Abgasreinigungsvorrichtung der abgeschalteten Zylindergruppe vermieden werden kann, und die einen geringeren Bauaufwand bedingen als die aus der JP-A-59-074321 bekannte Lösung, ist Aufgabe der vorliegenden Erfindung.
Zur Lösung dieser Aufgabe sind die kennzeichnenden Merkmale der Ansprüche 1 oder 3 vorgesehen, vorteilhafte Aus- und Weiterbildungen sind Inhalt der Unteransprüche.

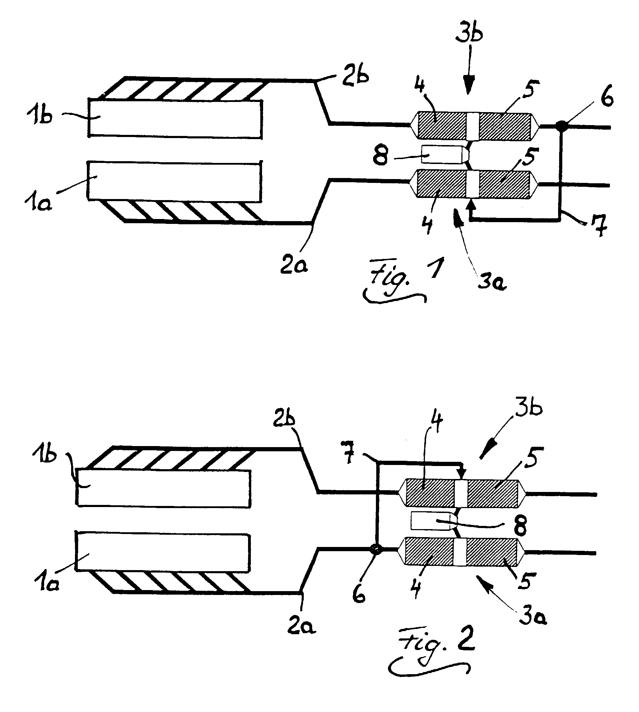

Näher erläutert wird die Erfindung anhand von Prinzipskizzen zweier bevorzugter Ausführungsbeispiele. In den Fig. 1, 2 sind dabei jeweils gleiche Bauelemente mit den gleichen Bezugsziffern bezeichnet.

Eine nicht näher dargestellte Brennkraftmaschine besitzt zwei Zylindergruppen 1a, 1b, die beispielsweise jeweils sechs Zylinder aufweisen können. Bei dieser Brennkraftmaschine kann es sich um eine sog. V12-Maschine handeln. Jeder Zylindergruppe 1a, 1b ist eine Abgasleitung 2a, 2b zugeordnet, in der - wie dargestellt - die aus den einzelnen Zylindern ausgestoßenen (Ab-)Gase gesammelt werden. Nicht dargestellt ist die Frischgaszufuhr zu den einzelnen Zylindern, da diese für die vorliegende Erfindung nicht von Bedeutung ist.

In jeder der Abgasleitungen 2a, 2b ist eine katalytische Abgasreinigungsvorrichtung 3a, 3b angeordnet. Diese katalytischen Abgasreinigungsvorrichtungen 3a, 3b sind als übliche Abgaskatalysatoren ausgebildet und besitzen dabei jeweils zwei in Reihe angeordnete Monolithen 4, 5. Die getrennten Abgasleitungen 2a, 2b werden bei den gezeigten Ausführungsbeispielen stromab der Abgaskatalysatoren 3a, 3b getrennt weitergeführt, jedoch können diese Abgasleitungen 2a, 2b stromab der Abgaskatalysatoren 3a, 3b ebenso zu einem gemeinsamen Abgasrohr zusammengeführt sein.

Die Zylindergruppe la kann in diversen Betriebspunkten der Brennkraftmaschine abgeschaltet werden, während die Zylindergruppe 1b stets befeuert werden soll. Diese Maßnahme wird ergriffen, um in niedrigen Lastpunkten der Brennkraftmaschine deren Gesamtwirkungsgrad zu erhöhen. Die Abschaltung der Zylindergruppe 1a erfolgt dabei dadurch, daß dieser Zylindergruppe kein weiterer Kraftstoff zugeführt wird, während jedoch der Gaswechsel durch diese Zylindergruppe aufrechterhalten wird. Werden nun die aus der abgeschalteten Zylindergruppe la ausgestoßenen Gase weiterhin durch deren Abgaskatalysator 3a hindurchgeleitet, so wird dieser Abgaskatalysator 3a - wie oben bereits erläutert - abkühlen und könnte somit bei einer späteren Wiederinbetriebnahme dieser Zylindergruppe 1a unwirksam sein. Um dies zu verhindern, können die folgenden unterschiedlichen Maßnahmen ergriffen werden:

Beim Ausführungsbeispiel nach Fig. 1 wird das Abgas der befeuerten Zylindergruppe 1b der katalytischen Abgasreinigungsvorrichtung 3a der abgeschalteten Zylindergruppe la zugeführt. In der Abgasleitung 2b ist hierzu stromab des Abgaskatalysators 3b ein Umleitventil 6 vorgesehen, das den in der katalytischen Abgasreinigungsvorrichtung 3b gereinigten Abgasstrom der befeuerten Zylindergruppe 1b gemäß dem gezeigten Pfeil über eine Zweigleitung 7 direkt in den Abgaskatalysator 3a der abgeschalteten Zylindergruppe 1a einleitet. In diesem Abgaskatalysator 3a vermischt sich sodann der heiße Abgasstrom der weiterhin befeuerten Zylindergruppe 1b mit dem relativ kalten, aus der abgeschalteten Zylindergruppe 1a ausgestoßenen Gasstrom, was zu einer Erwärmung des letzteren führt und somit eine extreme Abkühlung des Abgaskatalysators 3a verhindert.

Bei diesem Ausführungsbeispiel nach Fig. 1 mündet die Zweigleitung 7 zwischen den beiden Monolithen 4, 5 des Abgaskatalysators 3a, d. h. die Mündung dieser Zweigleitung 7 liegt stromab des ersten Monolithen 4 des Abgaskatalysators 3a. Hierdurch wird zwar der erste Monolith 4 dieses Abgaskatalysators 3a bei Abschaltung der Zylindergruppe 1a abgekühlt, nicht abgekühlt wird jedoch der zweite Monolith 5 dieses Abgaskatalysators. Damit ist sichergestellt, daß nach einer Zuschaltung dieser Zylindergruppe la sofort eine Konvertierung schädlicher Abgasbestandteile zumindest im zweiten Monolithen 5 des Abgaskatalysators 3a erfolgen kann. Andererseits wird mit der gezeigten Einleitung des Abgasstromes der Zylindergruppe 1b stromab des ersten Monolithen 4 des Abgaskatalysators 3a dieser erste Monolith 4 geschont. Vorteilhafterweise wird durch diese Maßnahme die Lebensdauer des Monolithen 4, während derer dieser eine ausreichende Konvertierungsrate aufweisen soll, erhöht.

Auch beim Ausführungsbeispiel nach Fig. 2 ist ein Umleitventil 6 sowie eine Zweigleitung 7 vorgesehen. Dabei befindet sich jedoch das Umleitventil 6 in der Abgasleitung 2a derjenigen Zylindergruppe 1a, die abgeschaltet werden soll. Somit werden die aus der abgeschalteten Zylindergruppe 1a ausgestoßenen Gase stromauf der zugeordneten katalytischen Abgasreinigungsvorrichtung 3a aus der Abgasleitung 2a abgeführt und über die Zweigleitung 7 in die Abgasleitung 2b der befeuerten Zylindergruppe 1b eingeleitet. Durch diese Maßnahme werden die Monolithen 4, 5 des Abgaskatalysators 3a dann, wenn die zugeordnete Zylindergruppe 1a abgeschaltet ist, überhaupt nicht mit einem Gasstrom beaufschlagt, so daß auch keine intensive Abkühlung dieses Abgaskatalysators 3a erfolgen kann.

Die Einleitung des aus der abgeschalteten Zylindergruppe 1a ausgestoßenen Gasstromes in die Abgasleitung 2b kann dabei sowohl stromauf, als auch stromab des Abgaskatalysators 3b erfolgen, ebenso kann dieser aus den abgeschalteten Zylindern 1a ausgestoßene Gasstrom auch direkt in den Abgaskatalysator 3b eingeleitet werden, wie dies in Fig. 2 dargestellt ist. Indem gemäß dem dargestellten Ausführungsbeispiel die aus der abgeschalteten Zylindergruppe 1a ausgestoßenen Gase stromab des ersten Monolithen 4 des Abgaskatalysators 3b in diesen eingeleitet werden, können Schadstoffe, die in diesem Gasstrom enthalten sind, im zweiten Monolithen 5 des Abgaskatalysators 3b vorteilhafterweise konvertiert werden. Würden - was ebenfalls möglich ist - die aus der abgeschalteten Zylindergruppe 1a ausgestoßenen Gase stromauf des Abgaskatalysators 3b in die Abgasleitung 2b eingeleitet, so würde der erste Monolith 4 des Abgaskatalysators 3b verstärkt beaufschlagt werden, darüber hinaus könnte die Temperatur des Monolithen 4 dadurch unter seine Betriebstemperatur absinken. Hingegen ist stromab des Monolithen 4 der Abgasstrom der weiter betriebenen Zylindergruppe 1b temperaturmäßig durch die Konvertierung erhöht, so daß die Mischungstemperatur, die sich aufgrund der Einleitung des Abgases der abgeschalteten Zylindergruppe 1a einstellt, immer noch ausreichend hoch ist. Aus diesen Gründen ist die gezeigte Anordnung besonders vorteilhaft.

Der Vollständigkeit halber sei erwähnt, daß die gesamte Abgasanlage der Brennkraftmaschine, bestehend aus den Abgasleitungen 2a, 2b sowie den Abgaskatalysatoren 3a, 3b, einen Brenner 8 aufweisen kann, mit Hilfe dessen anschließend an einen Kaltstart der Brennkraftmaschine die Abgaskatalysatoren 3a, 3b schnell auf ihre Betriebstemperatur gebracht werden können. Die Abgase dieses Brenners 8 werden dabei über die gezeigten Stichleitungen direkt oder indirekt in die beiden Abgaskatalysatoren 3a, 3b eingeleitet, jedoch kann dies sowie weitere Details insbesondere konstruktiver Art durchaus abweichend von den gezeigten Ausführungsbeispielen gestaltet sein, ohne den Inhalt der Patentansprüche zu verlassen.

## Patentansprüche

1. Brennkraftmaschine mit zumindest zwei Zylindergruppen (1a, 1b) oder Zylindern, denen jeweils eine eigene, eine katalytische Abgasreinigungsvorrichtung (3a, 3b) aufweisende Abgasleitung (2a, 2b) zugeordnet ist, die Bestandteil einer Abgasanlage ist, sowie mit einer Einrichtung zum Abschalten einer Zylindergruppe (1a) durch Unterbinden der Kraftstoffzufuhr bei Aufrechterhaltung des Gaswechsels durch diese Zylindergruppe (1a), wobei die Abgasanlage derart ausgebildet ist, daß die aus der abgeschalteten Zylindergruppe (1a) ausgestoßenen Gase durch die Abgase der weiterhin befeuerten Zylindergruppe (1b) erwärmt werden,
dadurch gekennzeichnet, daß das Abgas der befeuerten Zylindergruppe (1b) der katalytischen Abgasreinigungsvorrichtung (3a) der abgeschalteten Zylindergruppe (1a) zugeführt wird.

2. Brennkraftmaschine nach Anspruch 1,
dadurch gekennzeichnet, daß die katalytische Abgasreinigungsvorrichtung (3a) der abgeschalteten Zylindergruppe (1a) zumindest zwei in Reihe angeordnete Monolithen (4, 5) aufweist, und daß die Abgase der befeuerten Zylindergruppe (1b) stromab des ersten Monolithen (4) eingeleitet werden.

3. Brennkraftmaschine mit zumindest zwei Zylindergruppen (1a, 1b) oder Zylindern, denen jeweils eine eigene, eine katalytische Abgasreinigungsvorrichtung (3a, 3b) aufweisende Abgasleitung (2a, 2b) zugeordnet ist, die Bestandteil einer Abgasanlage ist, sowie mit einer Einrichtung zum Abschalten einer Zylindergruppe (1a) durch Unterbinden der Kraftstoffzufuhr bei Aufrechterhaltung des Gaswechsels durch diese Zylindergruppe (1a), wobei die Abgasanlage derart ausgebildet ist, daß die aus der abgeschalteten Zylindergruppe (1a) ausgestoßenen Gase durch die Abgase der weiterhin befeuerten Zylindergruppe (1b) erwärmt werden,
dadurch gekennzeichnet, daß die aus der abgeschalteten Zylindergruppe (1a) ausgestoßenen Gase stromauf der zugeordneten katalytischen Abgasreinigungsvorrichtung (3a) abgeführt und in die Abgasleitung (2b) der befeuerten Zylindergruppe (1b) eingeleitet werden.

4. Brennkraftmaschine nach Anspruch 3,
dadurch gekennzeichnet, daß die katalytische Abgasreinigungsvorrichtung (3b) der befeuerten Zylindergruppe (1b) zumindest zwei in Reihe angeordnete Monolithen (4, 5) aufweist, und daß die aus der abgeschalteten Zylindergruppe (1a) ausgestoßenen Gase stromab des ersten Monolithen (4) eingeleitet werden.

5. Brennkraftmaschine nach einem der vorangegangenen Ansprüche,
dadurch gekennzeichnet, daß die Abgasleitungen (2a, 2b) der einzelnen Zylindergruppen (1a, 1b) stromab der katalytischen Abgasreinigungsvorrichtungen (3a, 3b) zu einem gemeinsamen Abgasrohr zusammengeführt sind.

## Claims

1. An internal combustion engine with at least two cylinder groups (1a, 1b) or cylinders, each of which has its own exhaust pipe (2a, 2b) with its own catalytic exhaust gas purifying device (3a, 3b), which is a component of an exhaust system, and with an arrangement for shutting down one cylinder group (1a) by cutting off the fuel supply whilst keeping the gas exchange through this cylinder group (1a) intact, whereby the exhaust system is constructed such that the gases expelled from the shut down cylinder group (1a) are heated by the exhaust gases from the continuing fired up cylinder group (1b), characterised in that the exhaust from the fired up cylinder group (1b) is taken to the catalytic exhaust gas purifying device (3a) of the shut down cylinder group (1a).

2. An internal combustion engine according to Claim 1,
Characterised in that the catalytic exhaust gas purifying device (3a) of the shut down cylinder group (1a) has at least two monoliths (4, 5) arranged in rows, and that the exhaust from the fired up cylinder group (1b) is introduced down stream from the first monolith (4).

3. An internal combustion engine with at least two cylinder groups (1a, 1b) or cylinders, each of which has its own exhaust pipe (2a, 2b) with its own catalytic exhaust gas purifying device (3a, 3b), which is a component of an exhaust system, and with an arrangement for shutting down one cylinder group (1a) by cutting off the fuel supply whilst keeping the gas exchange through this cylinder group (la) intact, whereby the exhaust system is constructed such that the gases expelled from the shut down cylinder group (1a) are heated by the exhaust gases from the continuing fired up cylinder group (1b),
Characterised in that the gases expelled from the shut down cylinder group (1b) are removed upstream of the associated catalytic exhaust gas purifying device (3a) and introduced into the exhaust pipe (2b) of the fired up cylinder group (1b).

4. An internal combustion engine according to Claim 3,
characterised in that the catalytic exhaust gas purifying device (3b) of the fired up cylinder group (1b) has at least two monoliths (4, 5) arranged in rows, and that the gases expelled from the shut down cylinder group are introduced down stream of the first monolith (4).

5. An internal combustion engine according to one of the foregoing Claims,
characterised in that the exhaust pipes (2a, 2b) of the individual cylinder groups are brought together into a common exhaust pipe down stream from the catalytic exhaust gas purifying devices (3a, 3b).

## Revendications

1. Moteur à combustion interne comportant au moins deux groupes de cylindres (1a, 1b) ou des cylindres auxquels sont associés des tubulures d'échappement (2a, 2b) séparées, ayant chacune un dispositif de nettoyage catalytique des gaz d'échappement (3a, 3b), et qui font partie d'un échappement, ainsi qu'une installation pour mettre hors service un groupe de cylindres (1a) par coupure de l'alimentation en carburant tout en maintenant l'échange de gaz à travers ce groupe de cylindres (1a), l'installation de gaz d'échappement étant réalisée de façon que les gaz expulsés du groupe de cylindres (1a) mis hors service sont réchauffés par les gaz d'échappement du groupe de cylindres (1b) qui continue d'être alimenté,
caractérisé en ce que
les gaz d'échappement du groupe de cylindres (1b), alimenté sont fournis au dispositif de nettoyage catalytique de gaz d'échappement (3a) du groupe de cylindres (1a), mis hors service.

2. Moteur à combustion interne selon la revendication 1,
caractérisé en ce que
le dispositif de nettoyage catalytique des gaz d'échappement (3a) du groupe de cylindres (1a), mis hors service comprend au moins deux monolithes (4, 5) en série et les gaz d'échappement du groupe de cylindres (1b), alimenté, sont injectés en aval du premier monolithe (4).

3. Moteur à combustion interne comprenant au moins deux groupes de cylindres (1a, 1b) ou des cylindres auxquels est associée chaque fois une tubulure d'échappement (2a, 2b) propre, avec un dispositif de nettoyage catalytique des gaz d'échappement (3a, 3b), faisant partie d'un échappement ainsi qu'une installation pour mettre hors service un groupe de cylindres (la) en coupant l'alimentation en carburant tout en maintenant l'échange des gaz à travers ce groupe de cylindres (1a), l'installation d'échappement étant réalisée pour que les gaz expulsés par le groupe de cylindre (1a) mis hors service soient réchauffés par les gaz d'échappement du groupe de cylindre (1b) qui reste alimenté,
caractérisé en ce que
les gaz expulsés du groupe de cylindres (1a) mis hors service sont évacués en aval du dispositif de nettoyage catalytique des gaz d'échappement (3a), correspondants et sont injectés dans la tubulure d'échappement (2b) du groupe de cylindres alimenté (1b) .

4. Moteur à combustion interne selon la revendication 3,
caractérisé en ce que
le dispositif de nettoyage catalytique des gaz d'échappement (3b) du groupe de cylindres alimenté (1b) comporte au moins deux monolithes (4, 5) montés en série et les gaz expulsés du groupe de cylindre (la) coupé sont injectés en aval du premier monolithe (4).

5. Moteur à combustion interne selon l'une quelconque des revendications précédentes,
caractérisé en ce que
les tubulures d'échappement (2a, 2b) des différents groupes de cylindres (1a, 1b) sont réunies dans un échappement commun en aval des dispositifs de nettoyage catalytique des gaz d'échappement (3a, 3b).
